# EUROPEAN PATENT SPECIFICATION

(11) **EP 1 226 679 B1**
(45) Date of publication and mention of the grant of the patent: **07.05.2014**
(21) Application number: 00959425.0
(22) Date of filing: 25.08.2000
(51) Int. Cl.: H04L 9/00, H04L 29/06

(54) **COMMUNICATION PROTOCOL FOR SECURE COMMUNICATIONS SYSTEMS**
KOMMUNIKATIONSPROTOKOLL FÜR GESICHERTE KOMMUNIKATIONSSYSTEME
PROTOCOLE DE COMMUNICATIONS DESTINE A DES SYSTEMES DE COMMUNICATIONS SECURISEES

(30) Priority: 22.10.1999 US 425816
(43) Date of publication of application: 31.07.2002
(73) Proprietor: Motorola Solutions, Inc., Schaumburg IL 60196 (US)
(72) Inventor: KNAPCZYK, Stanley, Justice, IL 60458 (US); MURRILL, Larry, Schaumburg, IL 60193 (US)
(74) Representative: Boult Wade Tennant
(86) International application number: PCT/US2000/023395
(87) International publication number: WO 2001/031837

(56) References cited:
- EP-B1- 1 214 811
- US-A- 5 093 860
- US-A- 5 093 860
- US-A- 5 164 986
- US-A- 5 173 938
- US-A- 5 408 613
- FREIER ALAN ET AL.: 'The SSL protocol version 3.0', 18 November 1996, INTERNET DRAFT XP002939604 * page 18 - page 19 *
- STEVENS W.: 'TCP/IP illustrated', 1994, ADDISON WESLEY LONGMAN, INC. XP002939603 Volume 1, pages 23 and 34

## Description

### FIELD OF THE INVENTION

This invention relates generally to secure communication systems, and more particularly to a communication protocol or method for the formation and exchange of messages, including key management messages, in secure communications systems.

### BACKGROUND OF THE INVENTION

Secure communication systems are well known. Police and public safety personnel, for example, often require secure voice and/or data communications between mobile transmitters and receivers; such as in-car mobile or hand-held portable radios (mobiles) as well as fixed transmitters and receivers, such as a central dispatch station. The communication paths between the mobiles and the fixed end are typically wireless links, such as radio frequency (RF) channels. The communication paths between fixed transmitters and receivers are typically wireline links, such as land-based phone lines. Secure communication is made possible by designated transmitters and receivers (hereinafter "encryption devices") sharing an encryption key that uniquely specifies an encryption algorithm for the communication. Only encryption devices having identical keys are capable of intelligibly reproducing the communication. Each individual encryption device may have more than one key. For example, it is frequently desirable for supervisory radios to have several different keys to communicate with different groups of users each having a different key. The keys are usually changed periodically, typically weekly or monthly to reduce the likelihood that the keys might be obtained by unauthorized parties.

The process of loading encryption keys into the encryption devices, called rekeying, can be accomplished in a variety of ways. Over-The-Air Rekeying (OTAR) is the act of transmitting the encrypted keys from a centralized Key Management Facility (KMF), over a typical encrypted communication channel to one or more target encryption devices. Manual rekeying is the act of physically making contact between a key delivery device (e.g., Key Variable Loader, or KVL) and a target encryption device in order to deliver one or more encryption keys to the device. A third method, Store and Forward rekeying is described and claimed in related patent application Serial No. 09/387,546 and may be used in an ongoing manual rekeying scheme or upon initial set-up or fault recovery of a centralized key management system. Further prior art are US patents US 5164956 and US 5093860.

Generally, Store and Forward rekeying provides for storing key management messages along with a record of target encryption devices in a key delivery device (e.g., KVL). The key management messages and associated record may be constructed at a centralized KMF and then communicated to the KVL. Then, upon connection of the KVL to the respective targets, the appropriate key management messages are forwarded (communicated) to the appropriate target devices. The Store and Forward method prevents a KVL operator from accidentally rekeying a particular encryption device that should not have been rekeyed, prevents the operator from loading the wrong keys into a particular encryption device and provides for automatically recording the success or failure of rekeying activity. The Store and Forward rekeying method will support both encrypted ("black transfer to target") and unencrypted ("red transfer to target") modes of delivering rekeying messages to the target encryption devices.

There is a need to define a protocol for the formation and exchange of messages, including key management messages, which protocol allows for the exchange of key management messages between a KVL and one or more target devices. Preferably, the protocol should allow for exchanging messages between a KVL and one or more of a mobile or portable encryption device (e. g., radio), digital interface unit, encryption management controller, radio network controller or key management facility. The protocol should be usable in a manual or store-and-forward rekeying system. The protocol should also allow for the encryption of the key management message (s). The present invention is directed to satisfying or at least partially satisfying the aforementioned needs.

EP 1 214 811, cited by the EPO under Article 54(3) EPC, relates to key management methods for secure communications systems.

The present invention is as defined in the accompanying claims.

Embodiments of the present invention will now be described by way of example with reference to the accompanying drawings, in which:

### BRIEF DESCRIPTION OF THE DRAWINGS

FIG. 1 is a diagram illustrating a key delivery device connected to an encryption device according to an embodiment of the present invention;
FIG. 2 is a block diagram of the key delivery device of FIG. 1;
FIG. 3 is a flowchart showing a protocol for the formation and exchange of messages in accordance with the invention;
FIG. 4A is a bit field representation of a KMM frame in accordance with the invention;
FIG. 4B is a flowchart showing formation of a KMM frame in accordance with the invention;
FIG. 5A is a bit field representation of a KMM Status frame in accordance with the invention;
FIG. 5B is a flowchart showing formation of a KMM Status frame in accordance with the invention; and
FIG. 6 illustrates an example message exchange sequence between a KVL and a target in accordance with the invention.

### DESCRIPTION OF PREFERRED EMBODIMENTS

The following describes a communication protocol for the formation and exchange of messages, including key management messages, between a KVL and one or more target devices. The protocol defines a frame format and message exchange sequence that allow variable length KMMs to be routed through the KVL to the target device(s). The protocol is adapted for use in a manual or store-and-forward rekeying system and allows for the encryption of the key management message(s).

In one embodiment of the present invention, there is provided a method of exchanging messages between a key delivery device (e.g., KVL) and a target communication device (e.g., mobile radio, portable radio, digital interface unit, encryption management controller, radio network controller or key management facility). An operation-code field is formed for each of one or more messages to be exchanged between the key delivery device and the target communication device. One of the operation-code fields defines a key management message operation-code indicative of a key management message to be exchanged between the key delivery device and the target communication device. In association with the key management message, there is formed a length field, a control field, a target destination field, a key management message field, and a CRC field which fields are combinable to define a key management message frame. The key management message frame thereafter is exchanged between the key delivery device and the target communication device. Optionally, the step of forming a key management message frame is performable by the KVL (i.e., in a manual rekeying system) or is performed by the KMF and forwarded to the KVL (i.e., in a store-and-forward rekeying system). The key management message may be encrypted, in such case the key management message frame exchanged between the key delivery device and the target communication device includes an encryption data field.

In another embodiment of the present invention, there is provided a method of forming a key management message to be exchanged between a key delivery device and a target communication device. The method comprises forming a key management message operation-code field, a length field, a control field, a target destination field, a key management message field, and a CRC field which are combined in sequence to define a key management message frame exchangeable between the key delivery device and the target communication device. In one embodiment, the operation-code field and control field are one-byte fields, the length field is a two-byte field, the target destination field is a three-byte field and the key management message field is variable in length.

In still another embodiment of the present invention, there is provided a method of exchanging messages between a key delivery device and a target communication device according to a protocol using a number of predefined operation-codes. First, the key delivery device sends a first operation-code to the target communication device, the first operation-code requesting the target identify whether it recognizes the protocol. Then, the target communication device sends a second operation-code to the key delivery device, the second operation-code identifying if the target recognizes the protocol. Next, the key delivery device sends a key management message frame to the target communication device, the key management message frame including at least a third operation-code defining a key management message operation-code. Thereafter, the target communication device sends a fourth operation-code to the key delivery device, responsive to the key management message frame. The fourth operation-code may be a key management message operation-code.

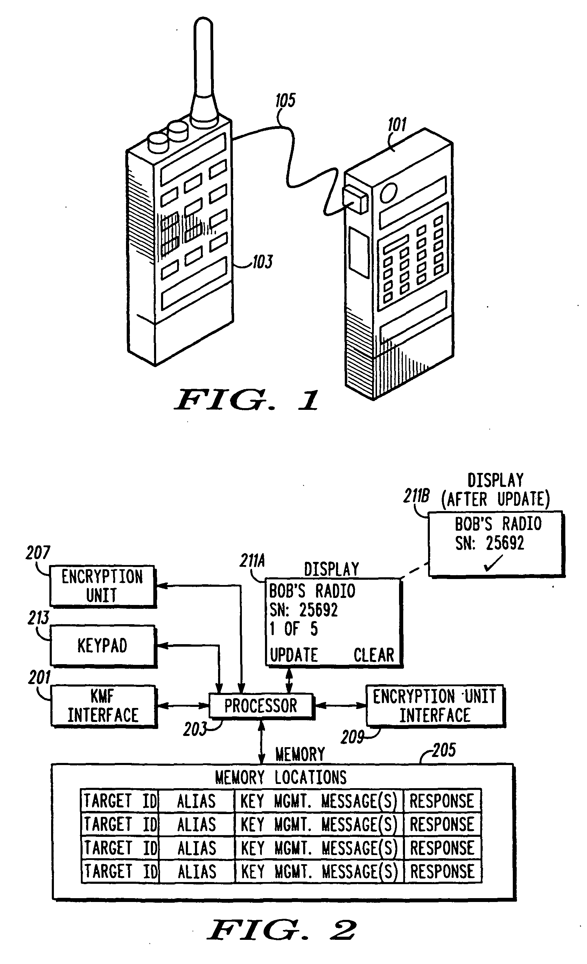

Turning now to the drawings and referring initially to FIG. 1, there is shown a key delivery device 101 connected to an encryption device 103. In one embodiment, the key delivery device 101 is a key variable loader (KVL) such as a KVL 3000, available from Motorola, Inc. and the encryption device 103 is a mobile radio, such as an ASTRO Spectra mobile radio, available from Motorola, Inc. As shown in FIG. 1, a cable 105 connects the key delivery device 101 to the encryption device 103 so that key management messages (KMMs) may be communicated from the key delivery device 101 to the encryption device 103. It will be appreciated, however, that wireless communications or other suitable means might be used to communicate key management messages from the key delivery device 101 to the encryption device 103. The key management messages may comprise rekeying messages supplying a selected one or more encryption keys to the encryption device 103.

FIG. 2 is a block diagram of the key delivery device 101 according to one embodiment of the invention. For convenience, the key delivery device 101 will hereinafter be referred to as the KVL. A KMF interface 201 (e.g., telephone line) allows for the KVL to be operably connected to a centralized key management facility, or KMF (not shown). An encryption unit interface 209 (e.g., cable) allows for the KVL to be operably connected to various encryption units. In one embodiment, the KMF communicates key management messages to the KVL that are to be delivered to specific encryption units by a "store-and-forward" technique. For example, encrypted rekeying messages destined for specific encryption units may be created at the KMF and securely downloaded to the KVL via the KMF interface 201. For convenience, those encryption units that are targeted by the KMF to receive messages will hereinafter be referred to as "target units." Alternatively, key management messages may be generated at the KVL and manually delivered to the target encryption units.

In one embodiment, the KMF communicates a record to the KVL identifying the various target units and identifying which messages are to be delivered to the target units. In other words, the record allows for the KVL to associate each of the target units to the key management messages that are to be delivered to those target units. The record may be communicated to the KVL in a single message or in multiple messages. The key management messages may include rekeying messages, in which case the record assures that the right keys will be delivered to the right units. The record may also include an assignment between the target units and one or more key delivery devices.

In one embodiment, the KVL delivers rekeying messages in either a "black transfer to target" mode or "red transfer to target" mode. "Black transfer to target" refers to the transfer of encrypted rekeying messages from the KVL to the target unit. "Red transfer to target" refers to the transfer of unencrypted rekeying messages from the KVL to the target unit. Generally, the red transfer to target mode is used for initial rekeying of a target unit that has no keys and the black transfer to target mode is used for subsequent rekeying of the target unit. Preferably, the KMF is capable of intelligently choosing between red transfer to target mode and black transfer to target mode based on global key management facility configuration parameters and the required rekeying operation.

The KVL processor 203 operates to store at least a portion of the record and/or instructions received from the KMF at various memory locations in memory 205. For example, as shown in FIG. 2, the record stored in the various memory locations of memory 205 includes the target ID, alias, and key management message(s) associated with the various target units, each of which may be provided to the KVL through the KMF interface 201. The target ID comprises in one embodiment a numeric ID (e.g., serial number) of the various target units. The alias comprises in one embodiment a more "user friendly" identification of the target units, such as "BOB'S RADIO." The key management messages comprise in one embodiment rekeying messages to be delivered to the various target units.

In one embodiment, the key management messages (e.g., rekeying messages) in both the red and black transfer to target mode of operation are communicated to the KVL in encrypted ("black") format and also stored in the memory in encrypted ("black") format. For example, in one embodiment of the red transfer to target mode, the encrypted ("black") key management messages delivered to the KVL are decrypted by the encryption unit 207, yielding decrypted ("red") messages to be transferred to the target. The decrypted ("red") messages are encrypted by the encryption unit 207, yielding encrypted ("black") messages that are stored in the memory 205. Then, when the KVL is to deliver the messages to a target unit, the processor 203 causes the encrypted ("black") messages stored in the memory 205 to be decrypted by the encryption unit 207, yielding decrypted ("red") messages for delivery to the target unit. In one embodiment of the black transfer to target mode, the encrypted ("black") key management messages delivered to the KVL are encrypted a second time by the encryption unit 207, yielding twice encrypted ("black") messages that are stored in the memory 205. Prior to delivery of the messages, the twice encrypted ("black") messages are decrypted by the encryption unit 207, yielding the original encrypted ("black") messages for delivery to the target encryption units.

The memory 205 also includes memory locations for storing response messages (designated "RESPONSE" in FIG. 2) from the various target units, provided through the target interface 209. The response messages may comprise, for example, an indication of a successful or unsuccessful attempts to transfer key management messages to the various target units. In one embodiment, the KVL collects the responses and reports them to the KMF, via the KMF interface.

Upon first connecting the KVL to an encryption unit, the KVL performs a handshaking process with the unit to determine its identity and to determine if the unit is a target unit. For convenience, the term "candidate encryption device" will be used to refer to a device whose identity is not yet ascertained, hence that is not yet known to be a target unit. In one embodiment, this is accomplished by the processor 203 first ascertaining the numeric unit ID of the candidate encryption device. The processor 203 compares the identity of the candidate encryption device to the identities of the target encryption devices stored in memory 205. If the identity of the candidate encryption device matches any of the identities of the target units (e.g., unit ID's) stored in memory, the processor 203 determines that the candidate encryption device is a target unit. Conversely, if the identity of the candidate encryption device does not match any of the unit ID's stored in memory, the processor 203 determines that the candidate encryption device is not a target unit.

If the candidate encryption device is determined to be a target unit, the KVL processor 203 retrieves from memory one or more key management messages destined for that target (e.g., twice-encrypted key management messages, in black transfer to target mode or once-encrypted key management messages, in red transfer to target mode), decrypts the messages (e.g., yielding "black" messages in black transfer to target mode or "red" messages in red transfer to target mode) and then causes the messages to be communicated to the target unit. If the candidate encryption device is determined not to be a target unit, the KVL processor 203 does not communicate any key management messages (e.g., rekeying messages) to that unit. Thus, under this store-and-forward approach, the decision of whether to load keys/messages into a particular device and the decision of which keys/messages to load into a particular device is taken out of the hands of the operator. The processor 203 causes the right keys to be loaded into the right encryption devices automatically upon connection of the KVL to the respective candidate units. Accordingly, it is virtually impossible in the store-and-forward method for a KVL operator in the field to accidentally rekey a device that should not have been rekeyed or to deliver the wrong keys to a particular device.

A display 211 is provided for displaying messages to the KVL operator. It will be appreciated that the display 211 may take various forms to display various different items of information. Display 211 A represents one example of a display that might appear upon first connecting the KVL to one of the target units. The display 211A shows the alias ("BOB's RADIO") of the target unit and the ID (SN: 25692) of the target unit. A message ("1 OF 5") informs the operator that BOB's RADIO is one of five target units that are to receive key management messages. This latter message helps to ensure that the KVL operator will reach each of the target units. Also shown are instruction fields ("UPDATE" and "CLEAR") identifying instructions that may be performed by the operator. In one embodiment, the instructions are exercisable by the operator pressing a suitable key (e.g., an "UPDATE" key) on a conventional keypad 213. Alternatively, the instruction fields themselves may comprise touch-responsive "keys," for example, that are exercisable by the operator touching the desired portion (e.g., "UPDATE") of the display. In one embodiment, exercise of the "UPDATE" instruction by the operator causes the processor 203 to automatically deliver key management messages to the target unit based on the record stored in the memory 205, as heretofore described.

Display 211B represents one example of a display that might appear after attempting an update of a target unit. The display 211B, like the display 211A, shows the alias ("BOB's RADIO") of the target unit and the ID (SN: 25692) of the target unit. Upon attempting the update, the KVL processor 203 receives an acknowledgement from the target unit indicating, for example, whether the attempted update was successful or unsuccessful. In one embodiment, the acknowledgement is a message ("RESPONSE") that is stored in the memory 205 of the KVL. Then, in one embodiment, the processor 203 causes the display 211 to display a message indicative of success or failure of the attempted update. In the example display 211B, a checkmark symbol ("√") informs the operator that the update of BOB's RADIO was successfully completed. Of course, a variety of messages or symbols other than a checkmark might be used to inform the operator of the outcome of the attempted update. Optionally, a message indicative of an unsuccessful attempt might also be displayed if the KVL is connected to a candidate unit that is determined not to be a target unit.

In one embodiment, after one or more targets have been contacted, the KVL processor 203 uploads detailed acknowledgements collected and stored in the memory 205 to the KMF, via the KMF interface 201. The detailed acknowledgements may include an identification of which keys were delivered to which units, an identification of which keys were unsuccessfully delivered, error conditions, and the like. Hence, the detailed acknowledgements provide an explicit and reliable means for a centralized key management facility to confirm rekeying results.

In accordance with one aspect of the present invention, there is provided a protocol for the formation and exchange of messages, including key management messages and other proprietary related data items between a KVL and a target communication device, usable in the above-described store-and-forward rekeying system, or in a manual or OTAR rekeying system. The protocol is referred to herein as "the KVL APCO Interface Protocol" or simply "the protocol." The term "target communication device" hereinafter refers broadly to any device that may communicate with a KVL and includes, but is not limited to, mobile or portable encryption units (e.g., radios), a KMF, another KVL, Digital Interface Unit (DIU), Radio Network Controller (RNC), or Encryption Management Controller (EMC).

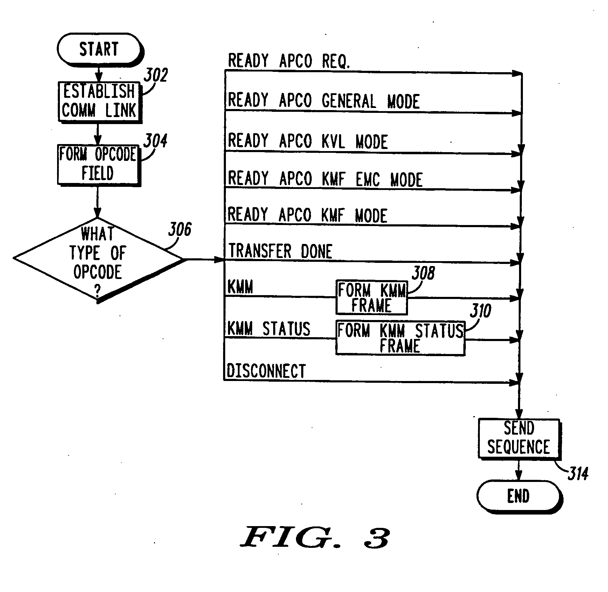

A flowchart illustrating general steps of the protocol is shown at FIG. 3. The process begins at step 302 with the KVL establishing a communication link with the target. Methods of establishing communication links between KVLs and target communication units are well known in the art. In one embodiment, a physical link is established between the KVL and the target. Where the target is a KMF, the physical link comprises a full duplex RS232 line. Otherwise, the physical interface between the KVL and most targets comprises a bi-directional (half duplex) communications line used to transfer data to or from a target device at 4 Kbps.

Once a communication link has been established, the KVL can send a series of operation-codes "opcodes" to the target to accomplish a desired task. The opcode(s) form a part of a one-byte operation-code field "opcode field," formed at step 304. The opcode(s) and/or opcode field(s) may be formed by the KVL or the target. In the KVL APCO Interface Protocol, a byte consists of a single start bit ("SB") transmitted for 250µs, followed by eight data bits ("D7," "D6," "D5," "D4," "D3," "D2," "D1" and "D0") at 250µs per bit, and a single parity bit ("PB") (even parity) for 250µs.

A list of opcodes and opcode fields according to one embodiment of the invention is provided in Table 1 below:

**Table 1**

| **OPCODES** | **USAGE** |
|---|---|
| Ready ASN [$901 | Not used with the KVL-APCO Interface Protocol. |
| Ready Astro [$9C] | Used for backwards compatibility with ASN keyloading protocol on the KVL-EMC interface. |
| | Note: This opcode is never used on the KVL-KMF or KVL-KVL interfaces. |
| Ready APCO Req [$C0] | Used by the KVL to request if a connected target speaks. KVL-APCO Interface Protocol. |
| Ready APCO General Mode [$D0] | Sent in response to a Ready APCO Req and indicates the target speaks KVL-APCO Interface Protocol and is operating in a general environment or mode. |
| | |
| | Note: For release 3.0A, encryption devices operating in DIUs, RNCs, and subscribers should reply with this opcode. |
| Ready APCO KVL Mode [$D1] | Sent in response to a Ready APCO Req and indicates the target speaks KVL-APCO Interface Protocol and is operating in a KVL environment or mode. |
| | |
| | Note: For release 3.0A, encryption devices operating in a KVL should reply with this opcode. |
| Ready APCO KMF EMC Mode [$D2] | Sent in response to a Ready APCO Req and indicates the target speaks KVL-APCO Interface Protocol and is operating in a KMF environment or mode. |
| | |
| | Note: For release 3.0A, encryption devices operating in a KMF should reply with this opcode. |
| Ready APCO KMF [$D3] | Sent in response to a Ready APCO Req and indicates the target speaks KVL-APCO Interface Protocol and is the KMF. |
| | |
| | Note: For release 3.0A, the KMF should reply with this opcode. |
| Transfer Done [$C1] | Indicates that a KVL or Target has transferred all queued KMMs. |
| KMM [$C2] | Indicates the subsequent octets are a KMM frame containing KMM(s). |
| KMM Status [$C3] | Indicates the subsequent octet contains the pass/fail status of the last received KMM. |
| CTO Data [$96] | Indicates that 16 Bytes if CTO test data will follow. |
| | |
| Disconnect [$92] | Indicates the transfer is complete and is being terminated. |

The READY ASN and READY ASTRO opcodes are not used with the KVL APCO Interface protocol but are provided for backwards compatibility with ASN and ASTRO keyloading protocols. Thus, for example, if one of these opcodes is detected while a KVL is attempting to establish a communications link with a target, then the KVL is operating in an ASN mode or ASTRO mode.

The READY APCO REQ opcode is used by the KVL to request if a target recognizes ("speaks") the KVL APCO Interface Protocol. The target will respond with either the READY APCO GENERAL MODE, READY APCO KVL MODE, READY APCO KMF EMC MODE or READY APCO KMF MODE opcode. Generally, these latter opcodes identify that the target speaks the KVL APCO Interface Protocol and also identifies the particular mode characteristic of the target. For example, the READY APCO GENERAL MODE indicates that the target is operating in a general environment or mode. In one embodiment, target devices comprising DIUs, RNCs, and subscriber radios reply with the READY APCO GENERAL MODE. The READY APCO KVL MODE indicates that the target is operating in a KVL environment or mode, and should thereby be used by encryption devices operating in a KVL. The READY APCO KMF EMC MODE indicates that the target is operating in a KMF environment or mode. Encryption devices operating in a KMF should reply with this opcode. The READY APCO KMF MODE indicates that the target is the KMF itself, and should thereby be used by the KMF.

The TRANSFER DONE opcode indicates that a KVL (or target) has transferred all queued key management messages that it desires to exchange with the target (or KVL). The DISCONNECT opcode is used to indicate that the keyload session is complete and the KVL is disconnecting from the target.

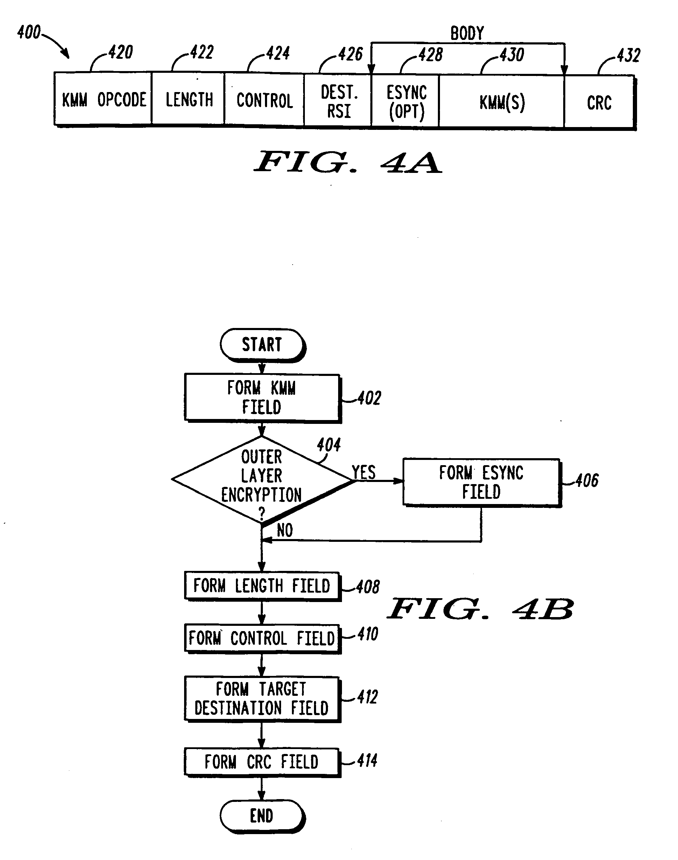

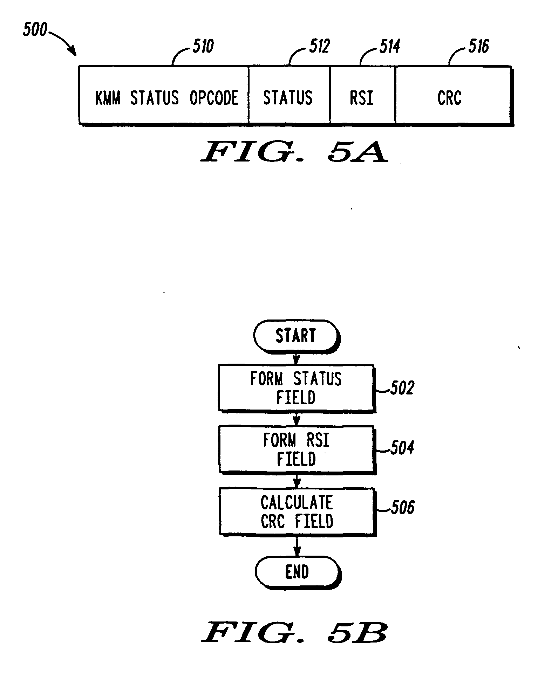

The KMM opcode indicates that a KVL (or target) will be sending a key management message (KMM) frame immediately following the KMM opcode. The KMM frame has a specific format that will be described in detail in relation to FIG. 4. Similarly, the KMM STATUS opcode indicates that a KVL (or target) will be sending a key management message status frame (KMM status) frame immediately following the KMM STATUS opcode. The KMM status frame is used to transfer the pass/fail status of the last received KMM. The KMM status frame has a specific format that will be described in detail in relation to FIG. 5.

Thus, depending on the type of opcode (step 306), additional data may or may not follow the opcode field. The opcodes READY APCO REQ, READY APCO GENERAL MODE, READY APCO KVL MODE, READY APCO KMF EMC MODE, READY APCO KMF MODE, TRANSFER DONE, and DISCONNECT are stand-alone opcodes. That is, at step 314, they are sent from the KVL to the target (or from the target to the KVL) without any additional data. The opcodes KMM and KMM STATUS indicate that additional data frames will follow. The data frames KMM and KMM STATUS associated with the respective opcodes KMM and KMM STATUS are formed at steps 308 and 310, respectively. In either case, these data frames may be formed by the KVL itself (e.g., in a manual rekeying system), by the KMF and then forwarded to the KVL (e.g., in a store-and-forward operation) or by the target. If more messages are to follow, other opcodes are formed at step 304 and, if appropriate, other data frames are formed at step 308, 310 and so forth until all desired messages are exchanged between the KVL and the target.

FIG. 4A is a bit field representation of a KMM frame 400 formed according to the KVL APCO Interface Protocol. Generally, the KMM frame format of FIG. 4A allows for the transfer of variable length KMMs, allows for encryption of the KMM(s), and allows for routing of KMMs through the KVL to a target device in a store-and-forward operation. The KMM frame comprises, in sequence, the KMM opcode 420, a length field 422, a control field 424, a target destination ("DEST RSI") field 426, an optional encryption data field ("Esync") 428, a KMM field 430 and a CRC field 432. The Esync field 428, if any, and the KMM field 430 are defined as the "body" of the KMM Frame. The KMM frame and any of its associated fields may be formed by the KVL itself (e.g., in a manual rekeying system), by the KMF and then forwarded to the KVL (e.g., in a store-and-forward operation), or by the target.

The process of forming the KMM frame 400 (step 308, FIG. 3) will be described in greater detail with reference to FIG. 4B. It should be noted that the process of FIG. 4B is undertaken after the KMM opcode has already been formed at step 304, FIG. 3. At step 402, a variable length KMM field 430 is formed. It is expected that normally there will only be one KMM in the KMM field 430. However, the KMM field 430 may contain multiple KMMs. Generally, the KMM field 430 may contain KMM(s) in standard APCO defined format (in which case the APCO Compliant bit in Control frame 424 is set) or may contain proprietary KMM(s). The particular format of APCO KMM(s) or proprietary KMM(s) will not be described in detail herein. Suffice it to say that the KMM(s) may include a source and/or destination RSI field, a Message Number Period, a status frame, and/or a record including target units and messages that are to be delivered to the target units (see FIG. 2).

If outer-layer encryption is used (step 404), a 13-byte encryption data field ("Esync" block 428) is formed at step 406. The Esync block 428 contains the information needed to decrypt the KMM(s) contained in the KMM frame 430. It includes a 9-byte Message Indicator, 1-byte algorithm ID, 2-byte key ID and 1-byte secondary SAP. The KMM field 430 and Esync block 428 (if any) forms the Body of the KMM frame 400.

A two-byte length field 422 is formed at step 408. The length field 422 identifies the length of the KMM Frame, including the Control, Dest RSI, Body and CRC fields. A one-byte control field 424 is formed at step 410.

The control field 424 contains a collection of control bits, including an APCO FORMAT COMPLIANT bit, VALIDATE bit, ENCRYPTION bit and a STATUS bit. The various control bits are shown and described in Table 2 below.

**Table 2**

| **Control Bit** | **Usage** |
|---|---|
| b0:AC: | Indicates the KMM fully complies with the APCO |
| APCO Format Compliant KMM | OTAR standard and should be processed the same as if received over the air. |
| b1:ENC: Encryption | Indicates outer layer encryption is used on the KMM(s) and the receipt of an esync block should be expected. |
| b2:VAL: Validate | Indicates whether APCO validation rules are required. |
| b3:STS Fail Status | If the contained KMM is a response KMM, this bit indicates what type of response it is. A 0 indicates the response is a Success response. A 1 indicates the response is a Fail response. If the contained KMM is not a response KMM, this bit should be set to 0. |
| | |
| | Note: With Store and Forward operation, the KVL must provide the KVL operator with immediate feedback on the success or failure of the keyload session. Since the KVL cannot view the contained response directly, as it is encrypted with one of the targets TEKs, this bit is used for that purpose. |
| b4:Reserved | N/A |
| b5:Reserved | N/A |
| b6:Reserved | N/A |
| b7:Reserved | N/A |

When bit 0 (i.e., the APCO FORMAT COMPLIANT bit) in the control byte is set, this indicates that the KMM 430 contained in the Frame 400 is fully compliant with the message formats defined by the APCO 25 OTAR standard. In one embodiment, the APCO COMPLIANT bit is equivalent to the manufacturers ID field for OTAR data packets. Thus, the KMM may be processed in generally the same manner as if it were received over the air, regardless of whether an OTAR, manual or store-and-forward system is being used. When bit I (i.e., the ENCRYPTION bit) is set, this indicates that encryption is being used and the body of the KMM frame 400 contains an esync block. When bit 2 (i.e., the VALIDATE bit) is set, this indicates that full validation of KMM header fields is required by the receiver. When bit 3 (i.e., the STATUS bit) is set to 1, this indicates that the contained KMM is a Response and the status is FAIL. When the STATUS bit is 0, the contained KMM is either a Success Response or the KMM is not a response.

A three-byte target destination ("DEST RSI") field 426 is formed at step 412. The DEST RSI field 426 allows for both encrypted ("black transfer to target") and unencrypted ("red transfer to target")the store-and-forward mode of operation. As previously described, the store-and-forward mode of operation involves sending a KMM from a KMF to a KVL, the KMM being stored in the KVL and ultimately forwarded to a target encryption unit ("radio"). In such case, the KVL is the receiving unit (or present target) for the transmission from the KMF, whereas the radio is the final destination (final target) of the KMM. The DEST RSI field 426 in the KMM Frame identifies the present target (e.g., the KVL), whereas a separate Destination RSI field (in the KMM itself) identifies the final target of the KMM.

In the first leg of a red store-and-forward operation, for example, where a message ultimately intended for a radio is sent from the KMF to a KVL, the DEST RSI field 426 in the KMM Frame header 400 will differ from the Destination RSI field in the KMM 430 itself. The KMM (and its Destination RSI field) is not encrypted, thus the KVL can use it to determine the final destination for the KMM.

In a black store-and-forward operation, the DEST RSI field 426 in the KMM Frame header 400 and the Destination RSI field in the KMM 430 itself will be the same (i.e., the RSI of the target). Both the KMM 430 (and its Destination RSI field) is encrypted, thus the KVL is not able to use it to determine the destination for the KMM. In such case, the KVL uses the (unencrypted) DEST RSI field 426 to identify the destination of the KMM. The KVL delivers the encrypted ("black") KMM frame to the RSI specified in the DEST RSI field 426.

As noted with respect to FIG. 2, the KMMs in both the red and black transfer to target modes of operation are communicated to the KVL in encrypted ("black") format. In a black store-and-forward operation, the KVL encrypts the encrypted ("black") KMM frame a second time, yielding twice encrypted ("black") messages that are stored in its memory. Prior to delivery of the KMMs to the target, the twice encrypted ("black") KMMs are decrypted, yielding the original encrypted ("black") KMMs for delivery to the target encryption units. In a red store-and-forward operation, the encrypted ("black") key management messages delivered to the KVL are decrypted by the encryption unit 207, yielding decrypted ("red") messages to be transferred to the target. The KVL constructs a new KMM Frame header 400, with the DEST RSI field 426 set to the RSI specified in the KMM. Then, in a second leg of the store-and-forward operation, the KVL delivers the unencrypted ("red") KMM frame to the RSI specified in the DEST RSI field 426 of the newly constructed KMM Frame header 400.

Whenever the DEST RSI field 426 in the KMM Frame header 400 is the same as the Destination RSI field in the KMM itself, this indicates that the receiving unit is the final target for the KMM. In the second leg of the above red store-and-forward scenario, for example, the newly constructed KMM Frame header has a DEST RSI field 426 that matches the Destination RSI field in the KMM itself, thus indicating that the RSI in the DEST RSI field 426 is the final target for the KMM. It should also be noted that the KVL itself might also be the final target for the KMM, in which case the KMM Frame header is not reconstructed at the KVL. The DEST RSI field 426 in the original KMM Frame header and the Destination RSI field in the KMM would both specify the RSI of the KVL. The KVL will process the KMM and may store keys, erase keys, etc. depending on the KMM received.

Finally, a two-byte CRC ("cyclic redundancy check") field 432is formed at step 414. The CRC field 432 is calculated over the Control Field 424, Dest RSI Field 426, and Body (Esync 428 and KMM 430) fields.

Now turning to FIG. 5A, there is shown a bit field representation of a KMM STATUS firame 500 formed according to the KVL APCO Interface Protocol. Generally, the KMM STATUS frame 500 is used to transfer the pass/fail status of the last received KMM. The KMM STATUS frame comprises, in sequence, the KMM STATUS opcode 510, a status field 512, an RSI field 514 and a CRC field 516. The KMM STATUS frame is formed by the entity receiving the last KMM, which may comprise the KVL, mobile or portable radio, etc.

The process of forming the KMM STATUS frame 500 (step 310, FIG. 3) will be described in greater detail with reference to FIG. 5B. The process of FIG. 5B is undertaken after the KMM STATUS opcode has already been formed at step 304, FIG. 3. The process begins at step 502 with the formation of a one-byte status field 512. A three-byte RSI field 514 is formed at step 504 that identifies the unit sending the KMM STATUS message. A two-byte CRC field 516 is calculated at step 506. The CRC field 516 is calculated over the Status and RSI fields using the same CRC calculator as for the KMM opcodes. The status field 512 contains one of various status values shown and described in Table 3 below.

**Table 3**

| **Status** | **Value(Hex)** |
|---|---|
| Success | $00 |
| Fail for unspecified reason | $01 |
| Reserved for future use | $02 thru $04 |
| Out of Memory | $05 |
| Outer Layer Unable to Decrypt | $06 |
| Reserved for future use | $07 thru $FE |
| MAC Error for "RED" SAF | $FE |
| Inner Layer Unable to Decrypt | $FF |

The KMM STATUS opcode should only be sent if the target determines a KMM Response is not required. For example, if a target can't outer-layer decrypt a KMM message, it would send a KMM STATUS in response. If a KMM response is sent, then the pass/fail bit in the control byte of the KMM frame is used to indicate KMM status. The Out of Memory status will be used by the KVL to indicate to the KMF that the KVL has no more memory available for store-and-forward operation and the received KMM has been discarded. The Fail for Unspecified Reasons status is used to indicate a failure when any of the other status values do not apply. The Outer Layer Unable to Decrypt status is used to indicate a problem with outer-layer decryption has prevented successful processing of the KMM. The MAC Error for RED SAF status is used to indicate the Message Authentication Code for a KMM used in red transfer to target mode has failed. The Inner Layer Unable to Decrypt status is used to indicate a problem with inner layer decryption of a KMM used in red transfer to target mode.

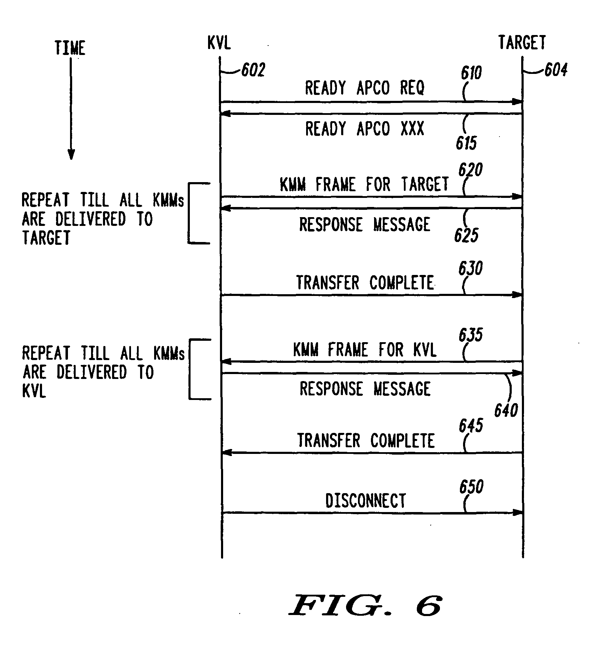

FIG. 6 shows an example message exchange sequence between a KVL and a target according to one embodiment of the present invention. Reference line 602 indicates messages initiated at the KVL and reference line 604 indicates messages initiated at the target. Prior to the message exchange, it is assumed that a connection has been made between the KVL and target (step 302, FIG. 3). In the example shown, the KVL first sends a READY APCO REQ message 610 to the target. In one embodiment, this involves sending a READY APCO REQ opcode, as described in relation to FIG. 3. The READY APCO REQ opcode, in effect, is a request that the target identify whether it speaks the KVL APCO Interface Protocol and, if so, to identify what type of target it is. Assuming the target speaks the KVL APCO Interface Protocol, it responds with an appropriate READY APCO XXX opcode 615. For example, in one embodiment, targets comprising DIUs, RNCs, and subscriber radios reply with the READY APCO GENERAL MODE opcode, targets operating in a KVL environment or mode respond with a READY APCO KVL MODE opcode, targets operating in a KMF environment or mode respond with a READY APCO KMF EMC MODE indicates that the target is operating in a KMF environment or mode. If the target is the KMF itself, it will respond with the READY APCO KMF MODE opcode.

If no response or the wrong response is received, the KVL will timeout and terminate the connection. Otherwise, the exchange will proceed with the KVL sending KMM(s) 620 to the target. Multiple KMM(s) 620 may be queued for the target. The KVL may transfer the KMM frames one at a time, or all at the same time. The target sends appropriate response message(s) 625 in return. The target might respond with its own KMM frame(s), and/or KMM STATUS frame(s), as appropriate, after any or all of the KMM(s) 620. For example, if the KVL sent a KMM frame containing a Modify Key command, the target might respond with its own KMM containing a Rekey ACK message 625. In one embodiment, the KMM STATUS frame is used when an appropriate acknowledgement KMM does not exist. After the KVL transfers all the KMMs it has for the target, it sends a TRANSFER DONE frame 630 to indicate it has no more KMMs for the target.

If the target has any KMM(s) for the KVL, it sends KMM frame(s) 635 and the KVL sends appropriate response(s) 640 (e.g., KMM frame(s) and/or KMM STATUS frame(s)) in return. Generally, the KMF is the only target that will have KMM(s) to send to the KVL. It will be appreciated, however, that any target may send KMM(s) to the KVL according to the present invention. When the target has finished transferring all the KMMs it has for the KVL, it sends a TRANSFER DONE frame 645 to indicate it has no more KMMs for the KVL. Then, the KVL sends a DISCONNECT frame 650 to indicate the exchange is complete.

The present disclosure has identified a protocol adapted for use in manual or store-and-forward rekeying systems for exchanging key management messages (KMMs) between a KVL and various communication devices. The protocol defines a frame format and message exchange sequence that allow variable length KMMs to be routed through the KVL to the communication devices. The protocol facilitates the exchange of KMMs, including initiation and termination of the exchange, on full duplex and half duplex interfaces. Moreover, the protocol provides the ability to outer layer encrypt the KMMs for security.

The scope of the invention is indicated by the appended claims rather than by the foregoing description. All changes that come within the meaning and range of the claims are to be embraced within their scope.

## Claims

1. A method for forming and exchanging messages between a key delivery device in communication with at least one encryption unit, the method comprising:
securely downloading by the key delivery device, rekeying messages from a key management facility, the rekeying messages destined for a target unit;
connecting the key delivery device to the encryption unit;
ascertaining a numeric ID of the encryption unit;
determining that the encryption unit is the target unit by matching the numeric ID to IDs stored in memory;
retrieving from memory, the rekeying messages;
decrypting the rekeying messages; and
communicating the decrypted rekeying messages to the target unit in a key management message which comprises a key management message operation-code field, a length field, a control field, a target destination (426) field, a key management message field, and a CRC field.

2. A key delivery device adapted to perform the steps of:
securely downloading by the key delivery device, rekeying messages from a key management facility, the rekeying messages destined for a target unit;
connecting the key delivery device to an encryption unit;
ascertaining a numeric ID of the encryption unit;
determining that the encryption unit is the target unit by matching the numeric ID to IDs stored in memory;
retrieving from memory, the rekeying messages;
decrypting the rekeying messages; and
communicating the rekeying messages to the target unit in a key management message which comprises a key management message operation-code field, a length field, a control field, a target destination (426) field, a key management message field, and a CRC field.

## Patentansprüche

1. Verfahren zur Bildung und zum Austausch von Nachrichten zwischen einer Schlüsselliefervorrichtung und mindestens einer mit ihr in Kommunikation stehenden Verschlüsselungseinheit, wobei das Verfahren umfasst:
sicheres Herunterladen, durch die Schlüsselliefervorrichtung, von Rekeying-Nachrichten von einer Schlüsselmanagementeinrichtung, wobei die Rekeying-Nachrichten für eine Zieleinheit bestimmt sind;
Verbinden der Schlüsselliefervorrichtung mit der Verschlüsselungseinheit;
Ermitteln einer numerischen ID der Verschlüsselungseinheit;
Bestimmen, dass die Verschtüsseiungseinheit die Zieleinheit ist, durch ein Abgleichen der numerischen ID mit IDs, die in einem Speicher gespeichert sind;
Abrufen der Rekeying-Nachrichten aus einem Speicher;
Entschlüsseln der Rekeying-Nachrichten; und
Kommunizieren der entschlüsselten Rekeying-Nachrichten an die Zieleinheit in einer Schlüsselmanagementriachricht, die ein Schlüsselmanagementnachrichten-Betriebscode-Feld, ein Längen-Feld, ein Steuer-Feld, ein Bestimmungsort (426)-Feld, ein Schlüsselmanagementnanhrichten-Feld und ein CRC-Feld umfasst.

2. Schlüsselliefervorrichtung, die geeignet ist, die folgenden Schritte durchzuführen:
sicheres Herunterladen, durch die Schlüsselliefervorrichtung, von Rekeying-Nachrichten von einer Schlüsselmanagementeinrichtung, wobei die Rekeying-Nachrichten für eine Zieleinheit bestimmt sind;
Verbinden der Schlüsselliefervorhchtung mit einer Verschlüsselungseinheit;
Ermitteln einer numerischen ID der Verschlüsselungseinheit;
Bestimmen, dass die Verschlüsselungseinheit die Zieleinheit ist, durch ein Abgleichen der numerischen ID mit IDs, die in einem Speicher gespeichert sind;
Abrufen der Rekeying-Nachrichten aus einem Speicher;
Entschlüsseln der Rekeying-Nachrichten; und
Kommunizieren der entschlüsselten Rekeying-Nachrichten an die Zieleinheit in einer Schlüsselmanagementnachricht, die umfasst: ein Schlüsselmanagementnachrichten-Betriebscode-Feld, ein Längen-Feld, ein Steuer-Feld, ein Bestimmungsort (426)-Feld, ein Schlüsselmanagementnachrichten-Feld und ein CRC-Feld.

## Revendications

1. Procédé de formation et d'échange de messages entre un dispositif de délivrance de clé en communication avec au moins une unité de cryptage, le procédé comprenant les étapes de :
téléchargement sécurisé, par le dispositif de délivrance de clé, de messages de renouvellement de clés à partir d'un équipement de gestion de clé, les messages de renouvellement de clés étant destinés à une unité cible ;
connexion du dispositif de délivrance de clé à l'unité de cryptage ;
vérification d'une ID numérique de l'unité de cryptage ;
détermination du fait que l'unité de cryptage est l'unité cible par recherche de correspondance entre l'ID numérique et des ID stockées dans une mémoire ;
récupération des messages de renouvellement de clés à partir de la mémoire ;
décryptage des messages de renouvellement de clés ; et
communication des messages de renouvellement de clés décryptés à l'unité cible dans un message de gestion de clé qui comprend un champ code d'opération de message de gestion de clé, un champ longueur, un champ commande, un champ destination cible (426), un champ message de gestion de clé, et un champ CRC.

2. Dispositif de délivrance de clé adapté pour exécuter les étapes de :
téléchargement sécurisé, par le dispositif de délivrance de clé, de messages de renouvellement de clés à partir d'un équipement de gestion de clé, les messages de renouvellement de clés étant destinés à une unité cible ;
connexion du dispositif de délivrance de clé à une unité de cryptage ;
vérification d'une ID numérique de l'unité de cryptage ;
détermination du fait que l'unité de cryptage est l'unité cible par recherche de correspondance entre l'ID numérique et des ID stockées dans une mémoire ;
récupération des messages de renouvellement de clés à partir de la mémoire ;
décryptage des messages de renouvellement de clés ; et
communication des messages de renouvellement de clés à l'unité cible dans un message de gestion de clé qui comprend un champ code d'opération de message de gestion de clé, un champ longueur, un champ commande, un champ destination cible (426), un champ message de gestion de clé, et un champ CRC.
